Europäisches Patentamt

European Patent Office

Office européen des brevets

(11) Veröffentlichungsnummer: **0 195 030**
**B1**

(12) **EUROPÄISCHE PATENTSCHRIFT**

(45) Veröffentlichungstag der Patentschrift: 29.08.90

(21) Anmeldenummer: 85904427.3

(22) Anmeldetag: 09.09.85

(86) Internationale Anmeldenummer:
PCT/DE85/00310

(87) Internationale Veröffentlichungsnummer:
WO 86/01860 27.03.86 Gazette 86/07

(51) Int. Cl.⁵: **F 02 P 7/06**

(54) IMPULSFORMER FÜR INDUKTIVE GEBER.

(30) Priorität: 14.09.84 DE 3433777

(43) Veröffentlichungstag der Anmeldung:
24.09.86 Patentblatt 86/39

(45) Bekanntmachung des Hinweises auf die
Patenterteilung:
29.08.90 Patentblatt 90/35

(84) Benannte Vertragsstaaten:
DE FR GB IT

(56) Entgegenhaltungen:
DE-A-2 837 669
FR-A-2 396 176
FR-A-2 441 173
FR-A-2 447 553
US-A-4 258 324

(73) Patentinhaber: ROBERT BOSCH GMBH
Postfach 50
D-7000 Stuttgart 1 (DE)

(72) Erfinder: KIRSCHNER, Michael
Humboldstr. 57
D-7530 Pforzheim (DE)
Erfinder: RAPP, Günter
Bahnhofstr. 31
D-7254 Hemmingen (DE)
Erfinder: ZECHNALL, Martin
Holdergasse 26
D-7141 Schwieberdingen (DE)

Courier Press, Leamington Spa, England.

## Beschreibung

### Stand der Technik

Die Erfindung geht aus von einem Impulsformer für induktive Geber, insbesondere Kurbelwellenwinkelgeber an Brennkraftmaschinen, nach der Gattung des Hauptanspruches.

Aus der Druckschrift "Motor-Elektronik", Robert Bosch GmbH, 1983, ist bereits ein Impulsformer für induktive Geber bekannt. Der induktive Geber ist ein Kurbelwellenwinkelgeber an einer Brennkraftmaschine, der eine Wechselspannung abgibt. Um diese Wechselspannung in einem elektronischen Steuergerät für die Brennkraftmaschine verarbeiten zu können, wird die Wechselspannung in rechteckförmige Stromimpulse umgeformt. Hierfür ist als Impulsformer ein Schmitt-Trigger vorgesehen. Die feste Hysterese des Schmitt-Triggers erhöht dabei gleichzeitig die Unempfindlichkeit gegenüber geringen Störungen. Dennoch kommt es bei Störungen, die über die Hystereseschwelle des Schmitt-Triggers hinausreichen, zu Fehlimpulsen am Ausgang des Schmitt-Triggers.

Aus der DE-OS 28 37 669 ist eine Meßwertaufbereitungsschaltung für induktive Geber bekannt, in der das Ausgangssignal des Gebers über einen Spitzenwertdetektor mit einer Impulsformerstufe verbunden ist. Dabei wird der positive Wert der Geberspannung zur Spitzenwertbildung herangezogen. Mit dem so ermittelten positiven Spitzenwert wird wenigstens eine der Schaltschwellen der Impulsformerstufe so beeinflußt, daß trotz unterschiedlich hohem Ausgangssignal des Gebers noch zwischen Geräusch- und Signalanteilen unterschieden werden kann.

### Vorteile der Erfindung

Der erfindungsgemäße Impulsformer nach der Gattung des Hauptanspruchs hat demgegenüber den Vorteil, daß wenigstens eine Triggerschwelle des Schmitt-Triggers nicht fest eingestellt ist, sondern durch den Spitzenwertdetektor in Abhängigkeit vom Spitzenwert des vorher verarbeiteten Signals nachgeführt wird. Damit ist eine von verschiedenen Geberamplituden abhängige adaptive Impulsformung gegeben, die eine verbesserte Störsicherheit bietet. Durch Verwendung des negativen Spitzenwerts zur Schwellwertbildung, ist der Ansteuerbereich der Schaltung besonders groß. Erfordert die nachfolgende Verarbeitung des geformten Impulses eine phasengenaue Erfassung des Gebersignals, so ist es weiterhin vorteilhaft, eine Triggerschwelle des Schmitt-Triggers fest einzustellen, insbesondere auf den Nulldurchgang der Geberspannung.

### Zeichnung

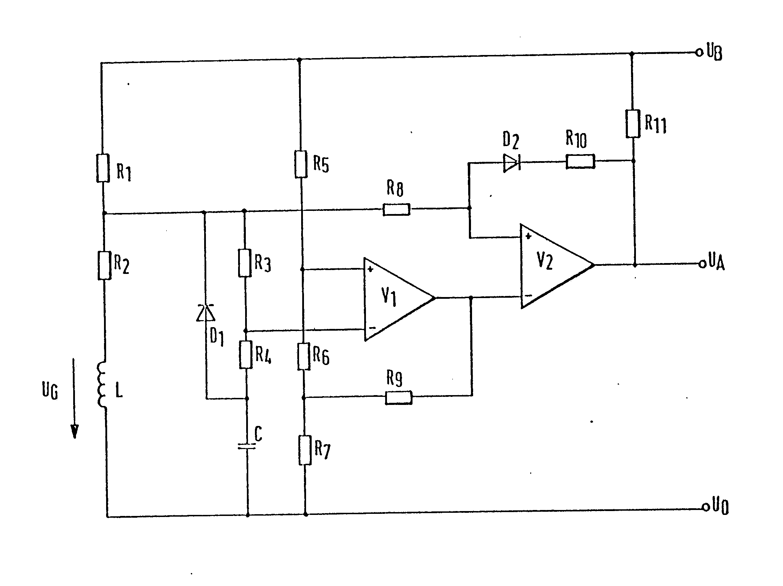

Ein Ausführungsbeispiel der Erfindung ist in der Zeichnung dargestellt und in der nachfolgenden Beschreibung näher erläutert. Die einzige Figur zeigt dabei das elektrische Schaltbild eines erfindungsgemäßen Impulsformers.

### Beschreibung des Ausführungsbeispieles

In der Figur ist ein Schaltbild eines induktiven Gebers mit einem nachgeschalteten Impulsformer dargestellt, der von einer Betriebsspannung $U_B$ und einer Bezugsspannung $U_0$ betrieben wird. Dafür ist die Induktivität L eines zur Vereinfachung der Darstellung nicht weiter dargestellten induktiven Gebers in Reihe mit zwei Widerständen R1, R2 geschaltet. Der Verbindungspunkt des so gebildeten ersten Spannungsteilers stellt damit den Ausgang des Gebers dar. Wird eine Geberspannung $U_G$ in der Induktivität L induziert, so verschiebt sich dementsprechend die Teilerspannung am Ausgang des Gebers.

Negative Spitzenwerte der Ausgangsspannung des Gebers werden über einen Spitzenwertdetektor bestehend aus einer Diode DI und einer Kapazität C erfaßt. Zwischen die Kapazität C und den Ausgang des Gebers ist weiterhin die Reihenschaltung von zwei Widerständen R4, R3 geschaltet. Der Verbindungspunkt der Widerstände R4, R3 liefert die so erhaltene Teilerspannung an den Minuseingang eines ersten Differenzverstärkers V1. Über einen Widerstand R8 ist der Ausgang des Gebers mit dem Pluseingang eines zweiten Differenzverstärkers V2 verbunden.

Die Differenzverstärker V1, V2 besitzen jeweils einen Open-Kollektor-Ausgangstransistor. Dementsprechend sind ihre Ausgänge hochohmig, wenn die Spannung am Minuseingang die Spannung am Pluseingang übersteigt und niederohmig, wenn die Spannung am Pluseingang die Spannung am Minuseingang übersteigt. Der Pluseingang des ersten Differenzverstärkers V1 ist durch einen zweiten Spannungsteiler R5, R6, der zwischen die Betriebsspannung $U_B$ und die Bezugsspannung $U_0$ geschaltet ist, auf das Teilerpotential festgelegt. Zwischen dem Widerstand R6 und der die Bezugsspannung $U_0$ führenden Leitung liegt ein weiterer niederohmiger Widerstand R7, auf den der Ausgang des ersten Differenzverstärkers V1 über einen Widerstand R9 zurückgekoppelt ist. Da der Widerstand R7 sehr niederohmig gegenüber den Widerständen R6, R5 ist, wird durch die Rückkoppelung über den Widerstand R9 das Potential am Pluseingang des Differenzverstärkers nur sehr geringfügig verschoben, wenn der erste Differenzverstärker V1 schaltet. Dennoch wird hierdurch eine Mittkopplung erreicht, die die Schalteigenschaft des ersten Differenzverstärkers verbessert.

Der zweite Differenzverstärker V2 ist mit seinem Minuseingang an den Ausgang des ersten Differenzverstärkers V1 angeschlossen. Der Ausgang des zweiten Differenzverstärkers V2 ist über einen Pull-Up-Widerstand R11 an die Betriebsspannung $U_B$ gelegt, sowie direkt mit einer Ausgangsklemme verbunden, an welcher die geformten Impulse als Spannung $U_A$ abgenommen werden können. Der Ausgang des zweiten Differenzverstärkers V2 führt weiterhin über einen Widerstand R10 auf die Kathode einer zweiten Diode D2, deren Anode mit dem Pluseingang des zweiten Differenzverstärkers V2 verbunden ist.

Im Ruhezustand, d.h. wenn die induzierte Geberspannung $U_G = 0$ ist und wenn kein Strom durch die Kapazität C fließt, ist das Potential am Minuseingang des ersten Differenzverstärkers V1 gleich dem am Ausgang des Gebers, d.h. am Teilerpunkt der Widerstände Rl, R2. Die Widerstände R5, R6 und R7 sind so dimensioniert, daß am Verbindungspunkt von R6 und R7 das gleiche und am Pluseingang von V1 ein etwas höheres Potential ansteht. Der Ausgang von V1 ist jetzt hochohmig und am Minuseingang von V2 liegt das gleiche Potential wie am Geberausgang.

Unter der Annahme, daß der Ausgang des Verstärkers V2 hochohmig sei und über den Pull-Up-Widerstand R11 nach $U_B$ gezogen wurde, ist die Diode D2 gesperrt. Das Potential an seinem Pluseingang stellt sich über den Widerstand R8 auf das Potential des Ausganges des Gebers ein.

Wird nun in der Induktivität L eine negative Spannung $U_G$ induziert, so folgt die Spannung am Pluseingang des zweiten Differenzverstärkers V2 über den Widerstand R8 der Spannung am Ausgang des Gebers. Unterschreitet dabei diese Spannung das Potential am Minuseingang des zweiten Differenzverstärkers V2, so wird der Ausgang des zweiten Differenzverstärkers V2 niederohmig und es erfolgt über den Widerstand R10 und die Diode D2 eine Mitkopplung auf den pluseingang, so daß der zweite Differenzverstärker bei sich wiedereinstellendem Ruhezustand nicht mehr zurückschaltet. Gleichzeitig wird die Kapazität C über die Diode D1 und den Widerstand R2 auf den negativen Spitzenwert der Geberspannung $U_G$ aufgeladen. Die Spannung am Minuseingang des ersten Differenzverstärkers V1 hängt von der negativen gespeicherten Spannung an der Kapazität C, von der Momentanspannung am Geberausgang, und dem Teilerverhältnis der Widerstände R3, R4 ab.

Bei positiv induzierter Spannung $U_G$ an der Induktivität L hängt es ebenfalls vom Verhältnis der Widerstände R3, R4 sowie der Spannung an der Kapazität C ab, wann das Potential am Minuseingang des ersten Differenzverstärkers V1 das potential am Pluseingang überschreitet. Dann wird der Ausgang des ersten Differenzverstärkers niederohmig und am Minuseingang des zweiten Differenzverstärkers V2 stellt sich eine Spannung ein, die etwa eine Diodenflußspannung niedriger ist als die am Pluseingang. Nun schaltet der zweite Differenzverstärker V2 ebenfalls auf hochohmig und der Ausgang wird über den Widerstand R11 gegen die Betriebsspannung $U_B$ gelegt. Damit ist Diode D2 wieder gesperrt.

Bei wiederum induzierter negativer Geberspannung $U_G$ in der Induktivität L wird der zweite Differenzverstärker V2 wiederum schalten, wenn die Spannung am Pluseingang des zweiten Differenzverstärkers V2 unter die Spannung am Minuseingang und damit unterdie am Widerstand R7 abfallende Spannung gelangt. Die gesamte Anordnung stellt also einen Schmitt-Trigger dar, der mit einer festen Triggerschwelle arbeitet, deren Spannung durch die am Widerstand R7 abfallende Spannung eingestellt ist, und dessen andere Triggerschwelle eine vom vorherigen negativen Spitzenwert der Geberspannung abhängige Schaltspannung ist, die durch die Widerstände R3 und R4 festgelegt ist.

## Patentansprüche

1. Impulsformer für induktive Geber, insbesondere induktive Kurbelwellenwinkelgeber an Brennkraftmaschinen mit einem Schmitt-Trigger, dessen Eingang mit dem Ausgang des Gebers in Verbindung steht und einem Spitzenwertdetektor, der mit dem Ausgang des Gebers in Verbindung steht und eine in Reihe mit einem Schalter, vorzugsweise einer Diode, geschaltete Kapazität aufweist, mit Mitteln (R3, R4) zur Einstellung einer ersten Tiggerschwelle des Schmitt-Triggers, die dem Spitzenwertdetektor nachgeschaltet sind, dadurch gekennzeichnet, daß der Schmitt-Trigger zumindest aus einem ersten (V1) und einem zweiten (V2) Differenzverstärker besteht, daß der eine Eingang des ersten Differenzverstärkers (V1) auf ein im wesentlichen festes Ruhepotential gelegt ist, daß der andere Eingang des ersten Differenzverstärkers (V1) mit Mitteln (R3, R4) zur Einstellung der ersten Triggerschwelle in Verbindung steht, daß der eine Eingang des zweiten Differenzverstärkers (V2) mit dem Ausgang des ersten Differenzverstärkers (V1) in Verbindung steht und daß der Ausgang des zweiten Differenzverstärkers (V2) auf den anderen Eingang des ersten Differenzverstärkers (V1) und den Ausgang des Gebers zurückgekoppelt ist.

2. Impulsformer nach Anspruch 1, dadurch gekennzeichnet, daß weitere Mittel (R5, R6, R7) zur festen Einstellung einer zweiten Triggerschwelle dem Schmitt-Trigger beigeschaltet sind.

3. Impulsformer nach einem der vorhergehenden Ansprüche, dadurch gekennzeichnet, daß der induktive Geber (L) mit einem ersten Spannungsteiler (R1, R2) in Reihe geschaltet ist und daß der Mittelabgriff des ersten Spannungsteilers den Ausgang des Gebers darstellt.

4. Impulsformer nach Anspruch 1, dadurch gekennzeichnet, daß der Ausgang des zweiten Differenzverstärkers (V2) über einen Schalter, vorzugsweise eine Diode (D2), auf den anderen Eingang des zweiten Differenzverstärkers (V2) zurückgekoppelt ist.

5. Impulsformer nach einem der vorhergehenden Ansprüche, dadurch gekennzeichnet, daß der eine Eingang des ersten Differenzverstärkers (V1) mit einem zweiten Spannungsteiler (R5, R6) in Verbindung steht und daß der Ausgang des ersten Differenzverstärkers über einen Widerstand (R9) auf den zweiten Spannungsteiler (R5, R6) zurückgekoppelt ist.

6. Impulsformer nach einem der Ansprüche 1 bis 5, dadurch gekennzeichnet, daß der andere Eingang des ersten Differenzverstärkers (V1) mit dem Mittelabgriff der Mittel (R3, R4) zur einstellung der ersten Trigggerschwelle in Verbindung steht.

**Revendications**

1. Formeur d'impulsions pour capteur ou transmetteur inductif notamment pour capteur d'angle de vilebrequin, inductif de moteurs à combustion interne comportant un déclencheur de Schmitt dont l'entrée est reliée à la sortie du capteur et un détecteur de valeur maximale relié à la sortie du capteur et comportant un montage en série formé d'un condensateur branché sur un commutateur de préférence une diode, ainsi que des moyens (R3, R4) pour régler un premier seuil de déclenchement du déclencheur de Schmitt et qui sont montés en aval du détecteur de valeur maximale, formeur caractérisé en ce que le déclencheur de Schmitt se compose d'au moins un premier amplificateur différentiateur (V1) et d'un second amplificateur différentiateur (V2), l'une des entrées du premier amplificateur différentiateur (V1) étant mise à un potentiel de repos principalement fixe, l'autre entrée du premier amplificateur différentiateur (V1) étant reliée à des moyens (R3, R4) pour régler le premier seuil de déclenchement, l'une des entrées du second amplificateur différentiateur (V2) étant reliée à la sortie du premier amplificateur différentiateur (V1) et la sortie du second amplificateur différentiateur (V2) étant couplée en réaction sur l'autre entrée du premier amplificateur différentiateur (V1) et la sortie du capteur.

2. Formeur d'impulsions selon la revendication 1, caractérisé par d'autres moyens (R5, R6, R7) pour régler de manière fixe un second seuil de déclenchement du déclencheur de Schmitt.

3. Formeur d'impulsions selon l'une des revendications précédentes, caractérisé en ce que le capteur inductif (L) est monté en série avec un premier diviseur de tension (R1, R2) et la prise médiane du premier diviseur de tension constitue la sortie du capteur.

4. Formeur d'impulsions selon la revendication 1, caractérisé en ce que la sortie du second amplificateur différentiateur (V2) est couplée en réaction par un commutateur de préférence une diode (D2) sur l'autre entrée du second amplificateur différentiateur (V2).

5. Formeur d'impulsions selon l'une des revendications précédentes, caractérisé en ce qu'une entrée du premier amplificateur différentiateur (V1) est reliée à un second diviseur de tension (R5, R6) et en ce que la sortie du premier amplificateur différentiateur est couplée en réaction par une résistance (R9) sur le second diviseur de tension (R5, R6).

6. Formeur d'impulsions selon l'une des revendications 1 à 5, caractérisé en ce que l'autre entrée du premier amplificateur différentiateur (V1) est reliée à la prise médiane des moyens (R3, R4) réglant le premier seuil de déclenchement.

**Claims**

1. Pulse shaper for inductive transmitters, in particular inductive cam shaft angle transmitters on internal combustion engines having a Schmitt trigger, the input of which is connected to the output of the transmitter and having a peak value detector which is connected to the output of the transmitter and has a capacitor connected in series to a switch, preferably a diode, having means (R3, R4) for setting a first trigger threshold of the Schmitt trigger which means are connected downstream of the peak value detector, characterized in that the Schmitt trigger consists of at least a first (V1) and a second (V2) differential amplifier, in that the one input of the first differential amplifier (V1) is connected to an essentially fixed quiescent potential, in that the other input of the first differential amplifier (V1) is connected to means (R3, R4) for setting the first trigger threshold, in that the one input of the second differential amplifier (V2) is connected to the output of the first differential amplifier (V1) and in that the output of the second differential amplifier (V2) is fed back to the other input of the first differential amplifier (V1) and to the output of the transmitter.

2. Pulse shaper according to Claim 1, characterized in that further means (R5, R6, R7) for the purpose of permanently setting a second trigger threshold are also connected to the Schmitt trigger.

3. Pulse shaper according to one of the preceding claims, characterized in that the inductive transmitter (L) is connected in series to a first voltage divider (R1, R2) and in that the centre tap of the first voltage divider represents the output of the transmitter.

4. Pulse shaper according to Claim 1, characterized in that the output of the second differential amplifier (V2) is fed back via a switch, preferably a diode (D2), to the other input of the second differential amplifier (V2).

5. Pulse shaper according to one of the preceding claims, characterized in that the one input of the first differential amplifier (V1) is connected to a second voltage divider (R5, R6) and in that the output of the first differential amplifier is fed back via a resistor (R9) to the second voltage divider (R5, R6).

6. Pulse shaper according to one of Claims 1 to 5, characterized in that the other input of the first differential amplifier (V1) is connected .to the centre tap of the means (R3, R4) for setting the first trigger threshold.